# EUROPÄISCHE PATENTANMELDUNG

(11) **EP 1 235 198 A2**
(43) Veröffentlichungstag der Anmeldung: **28.08.2002**
(21) Anmeldenummer: 02002327.1
(22) Anmeldetag: 31.01.2002
(51) Int. Cl.: G09F 13/22, G09F 9/33, G09F 9/35

(54) **Abdeckung einer Anzeigevorrichtung**

(30) Priorität: 21.02.2001 DE 10108390
(71) Anmelder: SIEMENS AKTIENGESELLSCHAFT, 80333 München (DE)
(72) Erfinder: Adams, Jürgen, 78052 Villingen-Schwenningen (DE); Grünebaum, Hubert, 78078 Niedereschach (DE); Wolf, Jürgen, 78048 Villingen-Schwenningen (DE)

(57) **Zusammenfassung**

Für die Abdeckung einer Anzeigevorrichtung,
- wobei die Abdeckung zumindest in Teilbereichen durchscheinend (1) ist,
- wobei die Abdeckung die Anzeigevorrichtung zumindest teilweise frontseitig abdeckt,
- wobei die Abdeckung elektromagnetische Felder abschirmt,
wird vorgeschlagen, sie derart auszugestalten, daß
a) entweder die Abdeckung aus einem intrinsisch elektrisch leitfähigen (2) polymeren Werkstoff besteht bzw. einen solchen Werkstoff enthält und die Abdeckung eine elektrische Kontaktierung (5) aufweist
b) oder daß auf der Abdeckung eine dünne, zumindest in Teilbereichen durchscheinende, intrinsisch elektrisch leitfähige Polymerschicht (2) aufgetragen ist und die Polymerschicht eine elektrische Kontaktierung (5) aufweist.

## Beschreibung

Die Erfindung betrifft eine Abdeckung einer Anzeigevorrichtung,
- wobei die Abdeckung zumindest in Teilbereichen durchscheinend ist,
- wobei die Abdeckung die Anzeigevorrichtung zumindest teilweise frontseitig abdeckt,
- wobei die Abdeckung elektromagnetische Felder abschirmt.

Abdeckungen der genannten Art werden in der Automobiltechnik für diverse Informationssysteme wie Kombiinstrumente oder Navigationszusatzanzeigen benötigt. Ein Kombiinstrument zum Beispiel enthält in einem einzigen Gehäuse außer mindestens einer heutzutage zumeist motorisch getriebenen Analoganzeige mit zunehmender Tendenz auch immer großflächiger werdende Anzeigesysteme wie Monitore, Flüssigkristallanzeigen, Leuchtdioden-, Elektrolumineszenz- und Plasma-Displays sowie mit Rechnerintelligenz ausgestattete Steuereinheiten samt elektrischer Verbindungsleitungen, um die vorgenannten Antriebe und Anzeigesysteme zu betreiben und deren Kommunikation mit anderen Einrichtungen im Fahrzeug zu ermöglichen. Dabei verursachen immer höhere Signalempfindlichkeiten und Taktfrequenzen zunehmende Probleme bezüglich der Aus- und Einstrahlung elektromagnetischer Felder. So können die in einem Kombiinstrument verbauten elektronischen und elektromagnetischen Bauteile wie Antriebe, Anzeigesysteme und Steuereinheiten durch das Emittieren elektromagnetischer Felder andere Einrichtungen im Fahrzeug wie Satellitennavigationssysteme oder Rundfunkgeräte stören - im schlimmsten Fall sogar sicherheitsrelevante Einrichtungen - oder die vorgenannten im Kombiinstrument verbauten elektronischen und elektromagnetischen Bauteile können durch elektromagnetische Felder anderer Emittenten in ihrer Funktion beeinträchtigt werden.

Eine als Kombiinstrument ausgebildete Anzeigevorrichtung ist in ihrem im Fahrzeug verbauten Zustand frontseitig, d. h. auf der dem Fahrer des Fahrzeugs zugewandten Seite, zumindest teilweise mit einer für Licht durchscheinenden Abdeckung versehen, die als Zifferblatt oder als Abdeckglas bzw. Abdeckscheibe ausgebildet sein kann. Die Skalen und Anzeigen eines Kombiinstrumentes sind fast immer beleuchtbar, um ihre Ablesbarkeit auch unter ungünstigen Umgebungslichtverhältnissen sicherzustellen. Zur Beleuchtung der Skalen und Anzeigen sind im Gehäuse des Kombiinstrumentes Leuchtmittel wie Glühbirnen oder Leuchtdioden angeordnet, die ihr Licht zumindest in Teilbereichen der Abdeckung zum Fahrer hin durchscheinen lassen.

Zur Verbesserung der elektromagnetischen Verträglichkeit gattungsgemäßer Anzeigevorrichtungen hat man versucht, einzelne Bauteile wie Antriebe, Steuereinheiten und Verbindungsleitungen durch Blechkonstruktionen oder leitfähige Ummantelungen abzuschirmen. Derartige Maßnahmen sind jedoch aufwendig und stehen der Vorgabe, gattungsgemäße Anzeigevorrichtungen möglichst flach auszubilden, oftmals entgegen. Auch andere handelsüblich zur Verfügung stehende Abschirmmaterialien wie elektrisch leitfähige Gazegewebe oder Geflechte aus feinen metallischen Drähten weisen den Nachteil auf, zum einen sehr teuer zu sein und andererseits nur über eine unzureichende Abriebfestigkeit und Dauerfestigkeit insbesondere bei Biegungen und Wölbungen zu verfügen, was aber gerade bei oftmals nicht plan ausgebildeten Abdeckgläsern von Kombiinstrumenten nicht hinnehmbar ist. Zumindest aber genügen die vorgenannten Materialien deshalb nicht den Erfordernissen für die in Rede stehenden Anzeigevorrichtungen, um dort für deren Abdeckungen eingesetzt zu werden, weil deren optische Eigenschaften wie ihre Lichtdurchlässigkeit und ihre kaum retuschierbare Einflußnahme auf das Design der Abdeckung nicht zufriedenstellend sind.

Somit besteht die Aufgabe der Erfindung darin, die Abdeckung einer Anzeigevorrichtung,
- wobei die Abdeckung zumindest in Teilbereichen durchscheinend ist,
- wobei die Abdeckung die Anzeigevorrichtung zumindest teilweise frontseitig abdeckt,
- wobei die Abdeckung elektromagnetische Felder abschirmt,
derart auszugestalten, daß eine kostengünstige, flache Bauweise einer gattungsgemäßen Anzeigevorrichtung möglich ist, wobei die Abdeckung sowohl über dauerhaft gute mechanische Gebrauchseigenschaften als auch vor allem über gute optische Eigenschaften verfügt und trotz ihrer relativ großflächigen Ausgestaltung in der Lage ist, über ihre gesamte Fläche elektromagnetische Felder abzuschirmen.

Diese Aufgabe wird durch eine Abdeckung mit den Merkmalen der nebengeordneten Ansprüche 1 und 2 gelöst. Die davon abhängigen Ansprüche zeigen weitere Ausgestaltungen und Weiterbildungen der gefundenen Lösung.

So wird eine Abdeckung einer Anzeigevorrichtung vorgeschlagen, bei der
a) entweder die Abdeckung aus einem intrinsisch elektrisch leitfähigen polymeren Werkstoff besteht bzw. einen solchen Werkstoff enthält und die Abdeckung eine elektrische Kontaktierung aufweist
b) oder alternativ dazu eine Abdeckung, auf die eine dünne, zumindest in Teilbereichen durchscheinende, intrinsisch elektrisch leitfähige Polymerschicht aufgetragen ist und wobei dann die Polymerschicht elektrisch kontaktiert ist.

Die Erfindung soll nun anhand von 2 Figuren am Beispiel einer als Zifferblatt ausgebildeten Abdeckung eines Kombiinstrumentes näher erläutert werden.

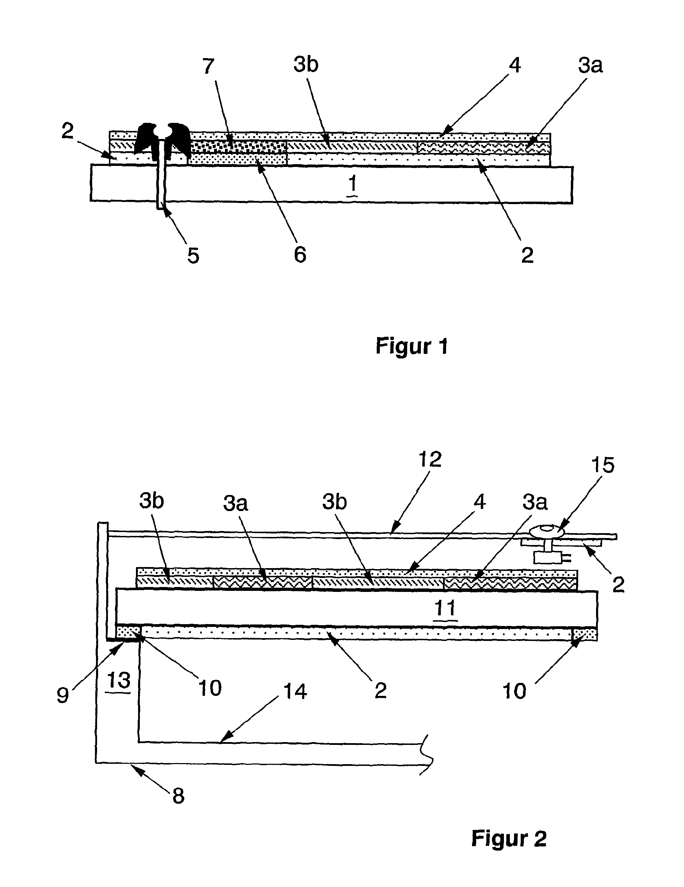

Wie die **Figur 1** zeigt, besteht ein derartiges Zifferblatt im wesentlichen aus
a) einem zumindest in Teilbereichen durchscheinenden Druckträger bzw. Schichtträger 1,
b) mindestens einer erfindungsgemäß vorgeschlagenen intrinsisch elektrisch leitfähigen Polymerschicht 2,
c) einer oder mehreren Farbschichten 3a bzw. 3b,
d) einer Deckschicht 4
e) und einer der Erdung dienenden Kontaktierung 5.

Weitere Polymerschichten 6, die sich in ihrer elektrischen Leitfähigkeit von der ersten Polymerschicht 2 unterscheiden, und zugehörige Abdeckschichten 7 können bedarfsweise hinzukommen.

Der Druckträger bzw. Schichtträger 1 kann aus einer Kunststoffplatte oder einer flexiblen Folie bestehen. Falls die Abdeckung der Anzeigevorrichtung nicht wie in dem hier gewählten Fall als Zifferblatt ausgebildet ist, sondern zum Beispiel als ein ein Kombiinstrument frontseitig vor mechanischen Einflüssen schützendes Abdeckglas, kann der Schichtträger 1 auch aus einem mineralischen Werkstoff bestehen, zum Beispiel aus Glas. Im Fall einer Kunststoffplatte ist ihr Kunststoffmaterial, das beispielsweise aus Polycarbonat bestehen kann, in der Regel mit weißen Streukörpern, sogenannten Pigmenten vermischt. Ein Ausführungsbeispiel für einen solchen Druckträger ist ein Makrofol-Träger, der in Verbindung mit Siebdrucktechniken Anwendung findet. Die Kunststoffplatte kann nun erfindungsgemäß zur Erzielung einer schirmenden Wirkung gegen elektromagnetische Felder vollflächig oder partiell mit einer elektrisch leitfähigen Polymerschicht 2 versehen werden. Flächige Beschichtungen können wirtschaftlich mittels Tauchbeschichtung oder Sprühbeschichtung hergestellt werden. Partielle Beschichtungen lassen sich besser mittels Siebdruckverfahren auf dem Druckträger aufbringen. Alle vorgenannten Beschichtungsverfahren lassen viele Freiheiten in der grafischen Gestaltung der Abdeckung - hier des Zifferblattes - zu, was in der angesprochenen Anwendung auch notwendig ist, um das Aussehen des Kombiinstrumentes den individuellen Kundenwünschen anzupassen.

Die auf dem Druckträger bzw. Schichtträger 1 aufgebrachte Polymerschicht 2 übernimmt den notwendigen Abtransport der durch elektromagnetische Felder induzierten Ladungen. Die Polymerschicht 2 ist ein sogenanntes konjugiertes Polymer mit der Eigenschaft, daß dessen Leitfähigkeit ohne Zusatz leitfähiger, anorganischer Stoffe allein aufgrund eines mesoskopischen Verhaltens zustande kommt, weshalb man hier von einer intrinsichen elektrischen Leitfähigkeit spricht. Polymere mit dieser Eigenschaft sind beispielsweise Polyacetylen, Polypyrrol, Polythiophen und Polyanilin.

Obwohl diese Polymere als Stoff in der Regel eine Färbung besitzen, sind sie bei Schichtdicken im Mikrometerbereich teilweise oder vollständig transparent, so daß mit diesen Stoffen beschichtete Zifferblätter realisiert werden können, die im Auflicht- oder Durchlichtverfahren beleuchtbar sind.

Wenn beispielsweise Polyanilin als Dispersion im Siebdruck-, Tauch- oder Sprühverfahren auf einem Druckträger aus Polycarbonat in einer Schichtdicke von 0,4 - 10 µm aufgebracht wird, sind Leitfähigkeiten von 0,5 S/m² erreichbar. Man kann auch Beschichtungen mit Polymeren herstellen, die eine Leitfähigkeit von 100 S/m² aufweisen, um diese Schichten in Verbindung mit einer elektrischen Schaltungsanordnung für Strom führende Leiterbahnen zu nutzen. Diese Option soll in der Figur 1 durch die Polymerschicht 6 angedeutet sein. Zu Isolationszwecken wird man solche Polymerschichten 6 mit sehr hoher elektrischer Leitfähigkeit mit einer geeigneten Abdeckschicht 7 überdecken.

Ein Zifferblatt erhält im Regelfall für seine farbliche Gestaltung weitere Aufträge. Dies können eine oder mehrere Farbschichten 3a bzw. 3b sein. Eine Farbschicht besteht zunächst einmal aus einem Bindemittel, welches zur Anpassung seiner Dichte an den Beschichtungsprozeß mit einem auf Wasserbasis oder Alkoholbasis bestehenden Lösungsmittel versetzt ist. Das Bindemittel umhüllt farbgebende Pigmente und verbindet die Pigmente mit dem Druckträger 1. In dem hier vorliegenden Fall sind die Farbschichten 3a bzw. 3b den farbtechnischen Bedingungen der intrinsisch elektrisch leitfähigen Polymerschicht 2 angepaßt. Polyanilin besitzt beispielsweise eine grünliche Grundfärbung, weshalb alle Farbschichten, die auf einer Polymerschicht 2 aus Polyanilin aufgetragen werden, mittels additiver und subtraktiver Farbmischung an die grünliche Polymerschicht 2 angepaßt werden müssen. Das Lösungsmittel ist so gestaltet, daß es die Polymerschicht 2 nur insoweit verändert, daß eine Haftung zwischen den Pigmenten der Farbschicht 3a bzw. 3b und der Polymerschicht 2 entsteht. Um der Polymerschicht 2 und den Farbschichten 3a bzw. 3b auf dem Druckträger 1 eine ausreichende Transparenz bzw. Deckfähigkeit und Haftkraft zu geben, betragen die Schichtdicken vorzugsweise jeweils 3 bis 12 µm.

Eine Deckschicht 4 kapselt alle am Schichtaufbau beteiligten Schichten zusammen mit dem Druckträger 1 vor schädlichen Umwelteinflüssen, wie z.B. dem Einfluß durch Feuchte. Die Auswahl des Materials dieser Deckschicht 4 und seines Verarbeitungsverfahrens beeinflussen das äußere Erscheinungsbild des Zifferblattes in erheblichem Maße. Eigenschaften wie Glanz, Haft- und Kratzfestigkeit werden mit dieser Deckschicht 4 eingestellt. Ein für die Deckschicht 4 optimales Material ist ein durch UV-Licht härtender Klarlack, der im Siebdruckverfahren aufgetragen wird. Dabei können die Oberflächenstruktur des Lackes und somit seine reflektierenden Eigenschaften durch das Mischungsverhältnis verschiedener UV-Licht-empfindlicher Lackkomponenten und durch die Steuerung des Eintrages von UV-Licht eingestellt werden, weil diese Parameter den Vernetzungsgrad der im Klarlack enthaltenen Monomere mit den Polymeren beeinflussen. Die Dicke der Deckschicht 4 kann durchaus auch über 12 µm liegen, da sie transparent ausgeführt ist. Ihre Lichtdurchlässigkeit liegt auch bei größeren Schichtdicken weit über 80%.

Zur Erzielung einer schirmenden Wirkung gegen elektromagnetische Felder benötigt eine elektrisch leitfähige Beschichtung immer eine Kontaktierung zur Erdung dieser Beschichtung. Dabei wirkt eine Abschirmung um so besser, je mehr Kontaktpunkte sie besitzt. Die Kontaktierung der intrinsisch elektrisch leitfähigen Polymerschicht 2 kann direkt oder indirekt erfolgen. In der Figur 1 ist als Beispiel eine direkte Kontaktierung dargestellt. Alternative Maßnahmen zur Kontaktierung bilden beispielsweise ein Auf- oder Andruck der leitfähigen Polymerschicht 2 an eine metallisierte Kontaktfläche auf dem Druckträger 1, eine Schneiddruckverbindung mit dem Gehäuse der Anzeigevorrichtung, d. h. hier des Kombiinstrumentes, eine Schraubkontaktierung mittels einer Zahnkranzmutter unter einem Schraubenkopf oder eine Klemmkontaktierung, bei der zum Beispiel eine U-förmige Blechklemme auf der Polymerschicht 2 freiliegend aufliegt.

Die Figur 1 zeigt als ein Ausführungsbeispiel für eine Kontaktierung 5 eine Niet-Schneidverbindung. Dabei durchstößt eine einfache metallische Niete beim Nietvorgang alle Schichten und stellt an den Begrenzungsflächen zur leitfähigen Polymerschicht 6 eine leitende Verbindung her. Die Polymerschicht 6 mit ihrer hohen Leitfähigkeit steht ihrerseits wieder in elektrischer Verbindung zur Polymerschicht 2. Elektrische Ladungen können so zum Beispiel über eine an der Niete befestigte elektrische Leitung, die in der Figur 1 jedoch nicht dargestellt ist, abgeleitet werden.

Für manche Ausführungen von Anzeigevorrichtungen ist es wünschenswert, sie komplett gegen elektromagnetische Felder zu schirmen. Durch den Einsatz eines mit einer leitfähigen Polymerschicht 2 versehenen Zifferblattes oder Abdeckglas ist ein hochfrequenzdichtes, d. h. ein vollständig gegen elektromagnetische Felder abgeschirmtes Kombiinstrument realisierbar. Denn wie die **Figur 2** zeigt, besteht das tragende Gehäuse des Kombiinstrumentes aus einem wannenförmigen Elementboden 8, der die elektronischen und elektromechanischen Bauteile des Kombiinstrumentes beeinhaltet und frontseitig das Zifferblatt 11 und in der Regel ein Abdeckglas bzw. eine Abdeckscheibe 12 trägt. Der Elementboden 8 weist zur Halterung des Zifferblattes 11 einen umlaufenden Innensteg 13 auf, wobei die oben liegende Fläche 9 des Innensteges 13 umlaufend mit einer handelsüblichen elektrisch leitfähigen Schicht oder ebenfalls mit einer intrinsisch leitfähigen Polymerschicht versehen ist. Ebenso ist das Zifferblatt 11 auf seiner Unterseite 10 umlaufend mit einer intrinsisch leitfähigen Polymerschicht 2 versehen. Bei der Montage von Zifferblatt 11 und Elementboden 8 ergibt sich durch die formschlüssige Auflage beider Komponenten eine umlaufende Kontaktbahn und somit eine Komplettschirmung des Kombiinstrumentes. Es ist demnach vorteilhaft, die Kontaktierung als eine die Abdeckung zumindest teilweise umrandende elektrische Verbindung auszubilden, wobei der Rand der Abdeckung an einem die Abdeckung halternden Bauteil zumindest teilweise formschlüssig anliegt. Wenn eine vollständige Schirmung der Anzeigevorrichtung bzw. des Kombiinstrumentes gegen elektromagnetische Felder erforderlich ist, wird die komplette Innenseite 14 des Elementbodens 8 mit einer intrinsisch leitfähigen Polymerschicht oder einer handelsüblichen elektrisch leitfähigen Schicht versehen.

Außer dem bisher beschriebenen Mehrschichtaufbau für ein zumindest in Teilbereichen durchscheinendes, gegen elektromagnetische Felder schirmendes Zifferblatt gibt es noch verschiedene andere Anwendungen für die erfindungsgemäße Lösung. So werden in Anzeigevorrichtungen auch optisch einfachere, einfarbige Displays, z.B. STN-Displays eingesetzt. Oftmals reichen hier zur Abdeckung einfache, einfarbige Diffusorscheiben aus. Bei diesen Ausführungen, die ohne mehrere gesonderte Farbschichten und ohne Deckschicht auskommen, werden Abdeckungen verwendet, die die intrinsisch leitfähige Polymerschicht in sich tragen oder aus einem solchen Werkstoff bestehen. In einem solchen Fall wird dem Kunststoffmaterial, aus dem die Abdeckung gefertigt werden soll, bei seiner Herstellung genau die Menge des leitenden Polymers in derjenigen Korn- oder Teilchengröße beigemischt, die die erforderliche Leitfähigkeit von z. B. 0,5 S/m² erzeugen und die die notwendige Filterfunktion, d. h. eine lichttechnische Dämpfung erzielen, beispielsweise eine Lichtdurchlässigkeit von 70%, eine Reflexion von 26% und eine Absorption von 4%.

Eine Weiterbildung der Erfindung kann auch darin bestehen, in die Anzeigevorrichtung derart zumindest eine einen elektrischen Schaltkreis schaltende Taste 15 einzubeziehen, daß die Taste 15 in der Abdeckung angeordnet und der Bereich der Taste 15 ebenfalls durch eine auf der Abdeckung aufgetragene oder in diese eingebrachte geerdete intrinsisch leitfähige Polymerschicht 2 gegen elektromagnetische Felder abgeschirmt ist, wie es in der Figur 2 angedeutet ist. Anwendungen ergeben sich z. B. bei einem Tastaturpaneel mit einer beleuchbaren Folientastatur oder bei einer Bedienelemente und Anzeigen enthaltenen Konsole, um elektronische und elektromagnetische Bauteile enthaltende Geräte aller Art bedienerseitig oder komplett gegen elektromagnetische Felder zu schirmen.

## Patentansprüche

1. Abdeckung einer Anzeigevorrichtung,
1.1. wobei die Abdeckung zumindest in Teilbereichen durchscheinend ist,
1.2. wobei die Abdeckung die Anzeigevorrichtung zumindest teilweise frontseitig abdeckt,
1.3. wobei die Abdeckung elektromagnetische Felder abschirmt,
**dadurch gekennzeichnet**,
1.4. daß die Abdeckung aus einem intrinsisch elektrisch leitfähigen polymeren Werkstoff besteht oder einen solchen Werkstoff enthält und
1.5. daß die Abdeckung eine elektrische Kontaktierung aufweist.

2. Abdeckung einer Anzeigevorrichtung,
2.1. wobei die Abdeckung zumindest in Teilbereichen durchscheinend ist,
2.2. wobei die Abdeckung die Anzeigevorrichtung zumindest teilweise frontseitig abdeckt,
2.3. wobei die Abdeckung elektromagnetische Felder abschirmt,
**dadurch gekennzeichnet**,
2.4. daß auf der Abdeckung eine dünne, zumindest in Teilbereichen durchscheinende, intrinsisch elektrisch leitfähige Polymerschicht aufgetragen ist und
2.5. daß die Polymerschicht eine elektrische Kontaktierung aufweist.

3. Abdeckung einer Anzeigevorrichtung nach einem der vorangegangenen Ansprüche,
**dadurch gekennzeichnet,**
**daß** die Kontaktierung als eine Nied-Schneidverbindung ausgebildet ist.

4. Abdeckung einer Anzeigevorrichtung nach einem der vorangegangenen Ansprüche,
**dadurch gekennzeichnet,**
**daß** die Kontaktierung als eine die Abdeckung zumindest teilweise umrandende elektrische Verbindung ausgebildet ist, wobei der Rand der Abdeckung an einem die Abdeckung halternden Bauteil zumindest teilweise formschlüssig anliegt.

5. Abdeckung einer Anzeigevorrichtung nach einem der vorangegangenen Ansprüche,
**dadurch gekennzeichnet,**
**daß** die Abdeckung als ein Zifferblatt (11) oder Abdeckglas (12) ausgebildet ist.

6. Abdeckung einer Anzeigevorrichtung nach einem der vorangegangenen Ansprüche,
**dadurch gekennzeichnet,**
**daß** die Anzeigevorrichtung als ein Kombiinstrument ausgebildet ist.

7. Abdeckung einer Anzeigevorrichtung nach einem der vorangegangenen Ansprüche,
**dadurch gekennzeichnet,**
**daß** die Anzeigevorrichtung zumindest eine Taste (15) enthält.

8. Abdeckung einer Anzeigevorrichtung nach einem der vorangegangenen Ansprüche,
**dadurch gekennzeichnet,**
**daß** die Abdeckung aus einem Kunststoff oder einem mineralischen Werkstoff besteht.

9. Abdeckung einer Anzeigevorrichtung nach einem der vorangegangenen Ansprüche,
**dadurch gekennzeichnet,**
**daß** die Abdeckung aus einem Schichtaufbau besteht, der einen Schichtträger (1), eine leitfähige Polymerschicht (2), eine oder mehrere Farbschichten (3a, 3b) und eine Deckschicht (4) umfaßt.

10. Abdeckung einer Anzeigevorrichtung nach einem der vorangegangenen Ansprüche,
**dadurch gekennzeichnet,**
**daß** auf der Abdeckung eine Polymerschicht (6) mit einer derart hohen intrinsischen Leitfähigkeit aufgetragen ist, daß diese Polymerschicht (6) in Verbindung mit einer elektrischen Schaltungsanordnung für Strom führende Leiterbahnen nutzbar ist.
